# FASCICULE DE BREVET EUROPEEN

(11) **EP 2 929 675 B1**
(45) Date de publication et mention de la délivrance du brevet: **25.05.2016**
(21) Numéro de dépôt: 15700601.6
(22) Date de dépôt: 21.01.2015
(51) Int. Cl.: H04L 29/08, G06F 17/30, G06Q 10/00, H04M 1/00, H04W 88/08

(54) **PROCEDE DE PILOTAGE DE PERIPHERIQUES, PILOTE DE PERIPHERIQUES ET PROGRAMME D'ORDINATEUR ASSOCIES**
VERFAHREN ZUR STEUERUNG VON PERIPHERIEVORRICHTUNGEN, ZUGEHÖRIGE TREIBER UND COMPUTERPROGRAMM
METHOD FOR CONTROLLING PERIPHERALS, ASSOCIATED PERIPHERAL DRIVER AND COMPUTER PROGRAM

(30) Priorité: 27.01.2014 FR 1400186
(43) Date de publication de la demande: 14.10.2015
(73) Titulaire: Thales, 92400 Courbevoie (FR)
(72) Inventeur: BOUTELEUX, Philippe, F-91229 Bretigny-sur-Orge (FR)
(74) Mandataire: Blot, Philippe Robert Emile
(86) Numéro de dépôt international: PCT/EP2015/051109
(87) Numéro de publication internationale: WO 2015/110457

(56) Documents cités:
- ALVIN T.S. CHAN: "Cookies On-the-Move: Managing Cookies on a Smart Card", ACM, 2 PENN PLAZA, SUITE 701 - NEW YORK USA, 14 mars 2004 (2004-03-14), pages 1693-1697, XP040173967,

## Description

La présente invention concerne un procédé de pilotage de périphérique(s) dans un système comprenant un serveur, des terminaux utilisateurs, un pilote de périphérique(s) connecté à au moins un équipement périphérique, et un réseau de télécommunication reliant le serveur et le dispositif de traitement, ledit procédé comprenant une étape de transmission, via le réseau de télécommunication, d'un message adressé au serveur par un terminal utilisateur ou d'un message adressé par le serveur au terminal utilisateur.

De tels procédés se rencontrent par exemple dans le domaine de la billettique. Pour rappel, la billettique a trait aux opérations de services, notamment de vente, sur des cartes sans contact utilisées par des usagers, par exemple pour voyager dans le réseau de transport ferroviaire, d'un opérateur.

Dans le domaine de la billettique, des automates de guichet, chacun comportant une interface homme-machine (IHM) intégrée, avec par exemple un écran tactile, et comportant en outre un périphérique intégré de lecture/écriture sans contact de cartes de transport, exécutent un logiciel de billettique préinstallé spécifique prenant en charge les échanges avec l'utilisateur, les échanges avec la carte de transport de l'utilisateur via le périphérique de lecture/écriture de carte et les échanges avec un serveur de billettique distant.

Une telle architecture présente un certain nombre d'inconvénients.

Il est notamment nécessaire de gérer le parc d'automates, de faire évoluer en parallèle les logiciels billettiques spécifiques à chaque type d'automate, et de gérer les multiples versions de ces logiciels.

Le document ALVIN T.S. CHAN: "Cookies On-the-Move: Managing Cookies on a Smart Card", ACM, 2 PENN PLAZA, SUITE 701 - NEW YORK USA, 14 mars 2004 (2004-03-14), pages 1693-1697, XP040173967 constitue l'état de l'art le plus proche.

L'invention est définie dans les revendications indépendantes 1, 6 et 7.

Le demandeur a imaginé selon l'invention de permettre à un usager muni d'un terminal utilisateur personnel doté d'un navigateur Web, par exemple une tablette ou un smart phone, de se connecter au serveur de billettique via Internet, de choisir un périphérique de lecture/écriture de carte de transport, par exemple mis à disposition de l'opérateur de transport et auquel présenter sa carte de transport. Et plus généralement, le demandeur a imaginé une solution pour piloter n'importe quel périphérique externe, depuis une page Web située sur un terminal utilisateur à proximité du périphérique.

A cet effet, suivant un premier aspect, l'invention propose un procédé de traitement du type précité caractérisé en ce qu'il comprend les étapes suivantes :
- interception, par ledit pilote de périphérique, du message adressé au serveur par le terminal utilisateur, respectivement du message adressé par le serveur au terminal utilisateur ;
- pilotage, par ledit pilote de périphérique, en fonction dudit message intercepté, d'au moins une opération de l'équipement périphérique ;
- modification, par ledit pilote de périphérique, en fonction de l'opération pilotée, dudit message intercepté, puis transmission, par ledit pilote de périphérique, dudit message modifié au serveur, respectivement au terminal utilisateur.

Le serveur n'a ainsi pas besoin de connaissance de la proximité géographique entre le terminal utilisateur de navigation et le périphérique, et l'utilisateur n'a pas à saisir d'identifiant unique du périphérique lors de sa connexion au serveur Web. Il n'est pas nécessaire que les actions initiées sur le terminal utilisateur passent d'abord par le serveur distant avant d'être transmises au périphérique pour action.

La présente invention permet ainsi un pilotage d'un périphérique à l'aide de terminaux utilisateurs et d'un serveur tout en minimisant le temps de traitement et le volume de ressources de communication nécessaires. Il n'y a pas nécessité d'installer de logiciel spécifique sur les terminaux utilisateurs. Un simple navigateur web standard suffit pour mettre en oeuvre l'invention par un terminal utilisateur.

Dans des modes de réalisation, le procédé de traitement suivant l'invention comporte en outre une ou plusieurs des caractéristiques suivantes :
- lesdits messages et message modifié, sont des réponses ou requêtes HTTP ou HTTPS ;
- le serveur est un serveur de billettique et l'équipement périphérique est un outil de lecture/écriture d'informations sur des cartes à puces électroniques ; l'opération pilotée de l'équipement périphérique comprend la lecture ou l'écriture, dans une carte à puce électronique d'informations par l'outil de lecture/écriture, lesdites informations lues ou écrites étant fonction dudit message intercepté,
   et la modification dudit message intercepté est fonction desdites informations lues ou écrites ;
- l'équipement périphérique est un outil de lecture/écriture sans contact d'informations sur des cartes à puces électroniques ;
- le pilote de périphérique est connecté à plusieurs équipements périphériques et le pilote de périphérique sélectionne, en fonction du contenu du message intercepté, celui desdits équipements périphériques qu'il va piloter ;
- ledit pilote de périphérique ne transmet pas au serveur un message qu'il reçoit et qui est adressé au serveur par un second terminal utilisateur tant qu'il n'a pas été mis fin à une transaction en cours engagée entre un premier terminal utilisateur et le serveur, des messages de la transaction étant transmis via le pilote de périphérique ;
- ledit pilote de périphérique filtre le message intercepté en fonction du destinataire du message et/ou en fonction de la présence ou l'absence d'un mot-clef dans l'URI du message.

Suivant un deuxième aspect, la présente invention propose un programme d'ordinateur destiné à un pilote de périphérique connecté à au moins un équipement périphérique et disposé entre au moins un terminal utilisateur et un réseau de télécommunication auquel un serveur est relié, ledit programme comportant des instructions pour mettre en oeuvre les étapes, incombant au pilote de périphérique, du procédé suivant le premier aspect de l'invention lors d'une exécution du programme par des moyens de calcul du pilote de périphérique.

Suivant un troisième aspect, la présente invention propose un pilote de périphérique adapté pour être disposé entre au moins un terminal utilisateur et un réseau de télécommunication auquel un serveur est relié, et adapté en outre pour être connecté à au moins un équipement périphérique, ledit pilote de périphérique étant caractérisé en ce qu'il est adapté pour intercepter un message adressé au serveur par le terminal utilisateur via le réseau, respectivement un message adressé par le serveur au terminal utilisateur via le réseau, ledit pilote de périphérique étant adapté pour piloter en fonction dudit message intercepté, au moins une opération de l'équipement périphérique, pour modifier en fonction de l'opération pilotée ledit message intercepté, puis pour transmettre ledit message modifié au serveur, respectivement au terminal utilisateur.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système mettant en oeuvre un pilotage de périphérique(s) dans un mode de réalisation de l'invention ;
- la figure 2 est une vue d'étapes mises en oeuvre dans un mode de réalisation de l'invention.

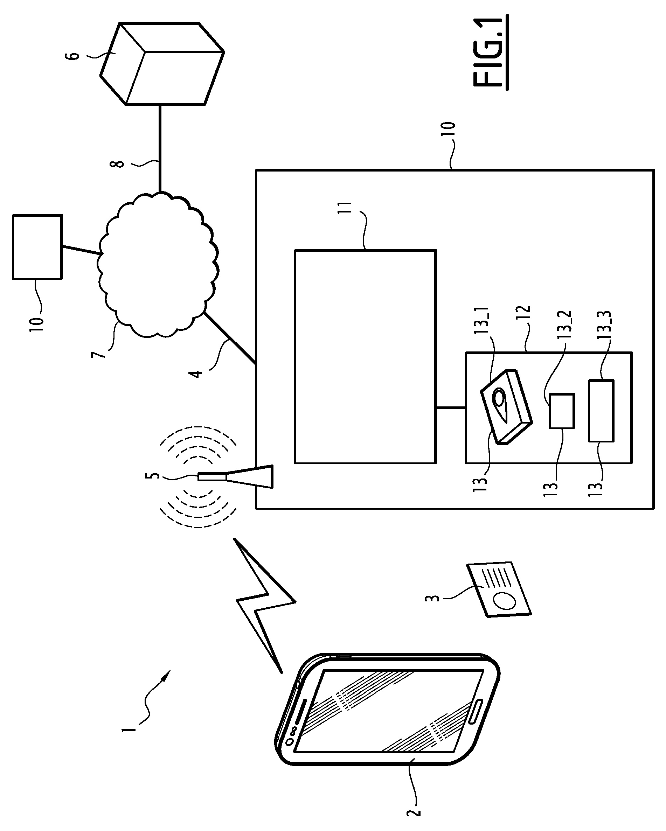

Sur la figure 1, un système 1 mettant en oeuvre un mode de réalisation de l'invention est représenté.

Le système 1 comporte un ou plusieurs blocs 10 de périphérique(s), un serveur Web 6 et une pluralité de terminaux utilisateurs 2.

Le serveur Web 6 est, dans le cas considéré, un serveur de billettique 6,

Chaque terminal utilisateur 2, fixe ou mobile, comprend un navigateur Web et une interface homme-machine (IHM). L'IHM du terminal utilisateur 2 comprend un écran d'affichage, notamment de pages Web, et un clavier.

Le navigateur Web est adapté pour émettre des requêtes http et recevoir des réponses http permettant l'affichage de pages Web sur le terminal utilisateur 2.

Parmi les terminaux utilisateurs 2 figurent par exemple des Smartphones, téléphones portables tablettes tactiles, PC fixes etc.

Les terminaux utilisateurs 2 comprennent des moyens de communication radio avec un réseau local sans fil (de type Wifi ou Bluetooth etc.), par exemple Wifi dans le cas considéré.

Chaque bloc 10 de périphérique(s) est relié au Web (réseau IP) 7 par exemple par une liaison Ethernet 4 et comporte un point d'accès 5 de réseau local sans fil, Wifi dans le cas considéré 7.

Un bloc 10 de périphérique(s) comporte un pilote de périphérique(s) 11 et un ensemble 12 de périphérique(s).

L'ensemble de périphérique(s) 12 comporte un ou plusieurs périphérique(s) 13. Dans le cas considéré, l'ensemble de périphérique(s) 12 comporte par exemple au moins un outil de lecture/écriture sans contact 13_1 (par exemple de type NFC, norme ISO/IEC 14443) sur des cartes électroniques 3 de transport. Les périphériques 13 peuvent être de nature diverse : écran, imprimante, appareil photo, caméra, scanner etc.

Le serveur de billettique 6 est relié au Web 7 par une liaison Ethernet 8.

Dans l'application considérée au domaine de la billettique, un bloc 10 de périphérique(s) peut notamment se situer dans une gare ferroviaire, dans un centre commercial, dans une entrée d'immeubles, ou encore au domicile même d'usagers.

Le bloc 10 de périphérique(s) est adapté pour collecter, via le point d'accès 5, les requêtes de connexion au réseau IP 7 émises depuis les terminaux utilisateurs 2 en Wifi. Dans un mode de réalisation, le bloc 10 de périphérique(s) est adapté pour être le point d'entrée des demandes de connexions au réseau local Wifi, et pour accepter ou refuser les connexions au réseau local Wifi des terminaux 2. Dans une variante, le flux du réseau local est routé vers le bloc 10 de périphérique(s).

Le pilote 11 du bloc 10 de périphérique(s) est adapté en outre pour détecter, puis interpréter et/ou compléter certaines des commandes envoyées depuis le navigateur d'un terminal utilisateur à destination du serveur de billettique 6 et pour piloter de manière appropriée les périphériques 13 qui lui sont associés.

Dans un mode de réalisation, le pilote 11 du bloc 10 de périphérique(s) est adapté en outre pour détecter, puis interpréter et/ou compléter certaines des commandes envoyées depuis le serveur de billettique 6 à destination d'un terminal utilisateur et pour piloter de manière appropriée les périphériques 13 qui lui sont associés.

Dans un mode de réalisation, le pilote 11 est adapté pour intercepter spécifiquement les échanges HTTP (en anglais « HyperText Transfer Protocol ») entre les terminaux 2 et le serveur 6, et relayer les autres échanges de manière transparente. Il est adapté pour interpréter les requêtes et réponses HTTP échangées entre les terminaux 2 et le serveur 6 de manière à déterminer en fonction de leur contenu (par exemple en fonction de la syntaxe des URI de requête), le ou les périphériques 13 à piloter et l'action respective ou enchaînement d'actions à leur faire réaliser (ces actions sont par exemple pilotées par le pilote 11 à l'aide de logiques « métier » spécifiques aux périphériques 13 et stockées en mémoire du pilote 11).

Pour chaque message de type réponse ou requête HTTP détectée échangée entre le serveur 6 et un terminal 2, le pilote 11 détermine comment le message doit être localement traité et/ou relayé, par exemple en mettant en oeuvre l'un et/ou l'autre de ces traitements :
- en faisant suivre directement le message à son destinataire ;
- en générant et envoyant directement une réponse au message ;
- en complétant la requête du terminal 2, puis en la faisant suivre au serveur 6 ;
- en complétant la réponse du serveur 6, puis en la faisant suivre au terminal 2 ;
- en interagissant avec le serveur 6, respectivement avec le terminal 2, avant d'envoyer une réponse au terminal 2, respectivement au serveur 6 ;
- en envoyant une nouvelle requête suite à la réception d'une réponse du serveur 6 etc.

Les deux fonctions suivantes sont donc mises en oeuvre par le pilote 11 :
- une fonction de type « proxy » d'interception et routage de messages HTTP, et
- une fonction d'interprétation de ces messages, permettant en outre la déduction des actions à commander sur les périphériques 13 en fonction de logiques métiers, par exemple à l'aide de machine d'états pour gérer l'asynchronisme des événements de requête/réponse/lecture/écriture, ou à l'aide de système(s) sans états, notamment si les URI des requêtes et réponses http sont riches d'informations et individuellement porteuses de l'état en cours (principes RESTful). Par exemple, la fonction d'interprétation est adaptée pour interpréter un jeu restreint de commandes de type CRUD (« Create », « Read », « Update » et « Delete »).

La fonction de type « proxy » intercepte et/ou route des messages HTTP par exemple en fonction de l'adresse du destinataire et de patrons d'URI (« URI Template » en anglais, cf. la définition par l'IETF dans le RFC6570 : http://tools.ietf.org/html/rfc6570), par exemple GET http://www.thales-ticketinci.com /Beacon/*, préétablis et configurés pour dérouter la requête ou la réponse vers la section appropriée de la fonction d'interprétation, et est adaptée pour faire suivre (ou non) la requête/réponse déroutée, modifiée (ou non) en retour. La fonction « proxy » permet également à la fonction d'interprétation d'initier spontanément des requêtes intermédiaires vers le serveur 6 et d'en récupérer la réponse.

Dans un mode de réalisation, le pilote 11 est adapté pour communiquer conformément aux standards de sécurisation du Web, tels que les protocoles https (en anglais « HyperText Transfer Protocol Secure »), SSL (en anglais « Secure Sockets Layer ») ou TSL (en anglais « Transport Secured Layer ») vis-à-vis des terminaux 2 et/ou du serveur 6.

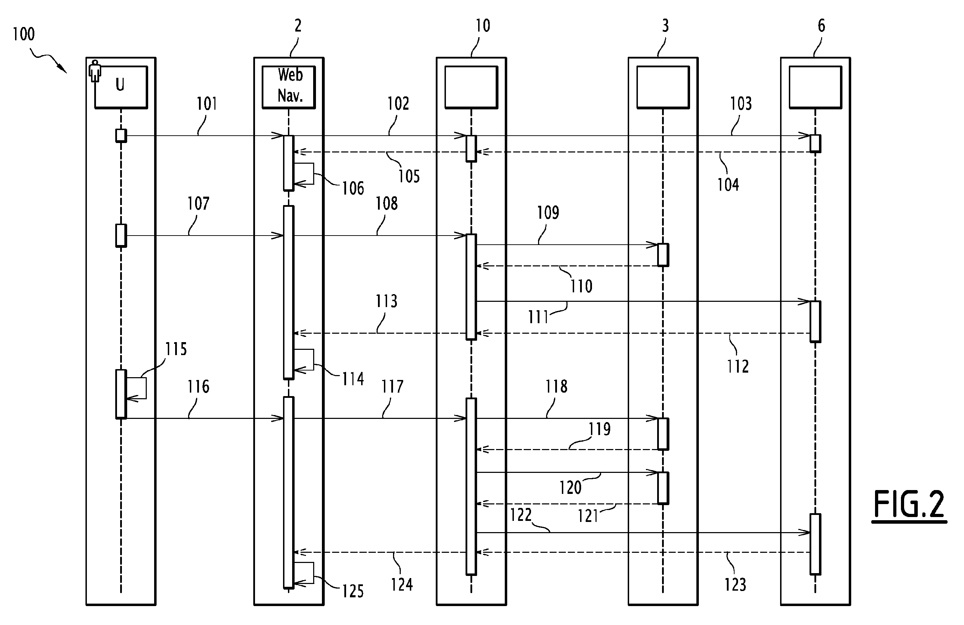

Un ensemble 100 d'étapes mis en oeuvre entre l'utilisateur U, le navigateur Web du terminal utilisateur 2, le bloc de périphériques 10, la carte sans contact 3 de l'utilisateur U et le serveur billettique 6 dans un exemple de réalisation de l'invention, est maintenant décrit en référence à la figure 2.

On notera que les URI et URL indiquées ci-dessous ne sont bien sûr fournies qu'à titre d'exemples.

Le pilote 11 du bloc de périphériques 10 est adapté pour intercepter les requêtes HTTP à destination de l'URL (en anglais « Uniform Resource Locator ») du serveur billettique 6, qui est dans le cas présent : www.thales-ticketina.com et dont la base de l'URI (en anglais « Uniform Resource Identifier ») commence par « Beacon », et pour en déduire un pilotage à effectuer sur le périphérique 13.1.

Un usager U d'un réseau de transports souhaite recharger le porte-monnaie électronique de sa carte 3 sans contact, dont le solde courant est 100 €.

Pour ce faire, dans une étape préalable, il se connecte à l'aide de son terminal utilisateur 2, par exemple un téléphone intelligent, au réseau Wifi mis en oeuvre par le point d'accès 5 du bloc 10 de périphériques situé à proximité (par exemple, le nom du réseau Wifi émis par le point d'accès 5 est lisible sur le bloc 10 de périphérique(s)).

Dans une étape 101, l'utilisateur U saisit l'URL (en anglais « Uniform Resource Locator ») du site Web billettique sur le navigateur Internet de son terminal 2.

Le navigateur émet dans une étape 102 une requête http GET www.thales-ticketina.com, à destination du serveur 6.

Cette requête est relayée dans une étape 103 par le bloc 10 de périphériques, sans modification ni intervention (absence de base d'URI commençant par « Beacon »), vers le serveur billettique 6.

Une réponse HTTP est renvoyée par le serveur 6 à destination du terminal utilisateur 2, dans une étape 104 : http OK : HTML Login Page. Elle comporte une page de login proposant à l'utilisateur de présenter sa carte 3 sans contact à l'outil de lecture/écriture sans contact 13_1 et d'entrer son code PIN personnel.

Cette réponse HTTP est également simplement relayée par le pilote 11 dans une étape 105.

Lorsque le navigateur Web du terminal utilisateur 2 reçoit cette réponse, il affiche la page de login sur l'écran du téléphone 2 dans une étape 106.

L'utilisateur U présente sa carte 3 à l'outil de lecture/écriture 13_1 et saisit son code PIN dans une étape 107.

A l'issue de la saisie du code PIN par l'utilisateur U, dans une étape 108, une requête HTTP (GET http://www.thales-ticketina.com /Beacon/Login?pincode=AzeZEtgfdg), comportant la valeur de ce code PIN encrypté, est envoyée au serveur billettique 6. Le verbe GET utilisé pour la requête suppose que l'action est idempotente (consultation uniquement, pas de modification, donc répétable).

Dans une étape 109, cette requête adressée au serveur 6 et avec la base « Beacon » est interceptée par le bloc 10 de périphériques.

Le module de pilotage 11 identifie en outre la commande « Login » dans l'URI de la requête, et selon les règles métiers billettiques établies dans le logiciel métier du pilote 11, commande en conséquence à l'outil de lecture/écriture 13_1 de lire, dans la carte 3 alors présentée à l'outil 13_1, le n° d'identification unique (MediaID) et le solde de porte-monnaie électronique (TPurse). Ces informations sont lues par l'outil 13_1 et transmises dans une étape 110 au pilote 11.

Dans une étape 111, le pilote 11 ajoute ces deux informations à la requête initiale en provenance du terminal utilisateur 2, remplace la base « Beacon » par « Server », puis envoie la requête ainsi modifiée au serveur billettique 6, soit GET http://www.thales-ticketina.com /Server/Login?pincode=AzeZEtgfdg&mediaID=ZErZerzRZErre&tpurse=100, (aucune règle métier ne s'applique désormais à l'url modifiée renvoyée).

Dans une étape 112, le serveur billettique 6 exploite ces informations d'identification (il vérifie notamment l'association entre le code PIN saisi et le n° d'identification unique) et de solde et renvoie au terminal utilisateur 2 une page Web contenant les informations associées au compte de l'utilisateur et à la carte présentée, dont le solde du porte-monnaie (http OK : HTML Customer Media Page). Cette page propose également de créditer le porte-monnaie d'un montant à saisir.

Cette page est relayée au terminal utilisateur 2 par le pilote 11 sans intervention dans une étape 113.

Lorsqu'il reçoit cette page, dans une étape 114, le navigateur Web du terminal 2 l'affiche, présentant ainsi le solde de 100 € à l'utilisateur U, et un champ à renseigner par l'utilisateur pour indiquer le montant à créditer sur la carte.

Dans une étape 115, l'utilisateur U saisit dans ce champ un montant à créditer de 10 €, et valide, dans une étape 116, ce rechargement requis.

Une requête (étape 117) est envoyée par le navigateur Web du terminal utilisateur 2 avec la commande « Reload » (PUT http://www.thales-ticketina.com /Beacon/TPurse/Reload?mediaID=ZErZereRZErre&amount=10), cette fois avec le verbe HTTP PUT, puisque l'on souhaite écrire le nouveau solde crédité sur la carte.

Comme précédemment, dans une étape 118, le pilote 11 intercepte cette requête (adressée au serveur et qui comprend la base « Beacon »). Il identifie en outre la commande « Reload », dans l'URI de la requête, et selon les règles métiers billettiques établies, en déduit qu'il doit commander à l'outil de lecture/écriture 13_1 de lire, dans la carte 3 alors présentée à l'outil 13_1, le n° d'identifiant MediaID et le solde.

Ces informations sont fournies dans une étape 119 par l'outil 13_1.

Le pilote 11, dans une étape 120, vérifie que ces informations fournies sont bien identiques à celles présentes dans l'URI traitée, et dans le cas positif, ajoute le montant à créditer au solde (le résultat de cette somme est alors 110 €), puis il commande à l'outil 13_1 de réécrire la nouvelle valeur sur la carte 3.

Une fois que l'outil 13_1 a confirmé que l'écriture avait été réalisée (étape 121), le pilote 11 modifie l'URI en y remplaçant « Beacon » par « Server » et en y ajoutant le montant du crédit et le solde courant de 110, et fait suivre (étape 122) cette requête PUT http modifiée au serveur 6 (action de modification d'état) : PUT http://www.thales-ticketing.com /Server/TPurse/Reload?mediaID=ZErZereRZErre&amount=10&tpurse=110.

Le serveur 6, dans une étape 123, prend en compte le résultat de l'action sur la carte 3 indiqué dans la requête reçue et renvoie au terminal utilisateur 2 une réponse indiquant cette prise en compte du nouveau solde : http OK : TPurse=110.

Le pilote 11 reçoit cette réponse et la fait suivre directement (étape 124) au terminal utilisateur 2 comme si cela était une réponse à sa requête initiale et non celle modifiée par le pilote.

La réponse est une page Web qui est affichée par le navigateur Web (étape 125) et qui présente le résultat de l'opération avec un solde crédité que l'utilisateur pourra vérifier avant de retirer sa carte.

On suppose que le paiement sera effectué par un processus de facturation lié au compte de l'utilisateur sur le serveur billettique 6.

Ainsi l'invention, plutôt que de relier le serveur billettique indépendamment et séparément au terminal utilisateur et à l'outil de lecture/écriture, associe à l'outil de lecture/écriture un pilote de périphériques qui joue un rôle de routeur intermédiaire vers le serveur billettique 6 et plus généralement vers le réseau IP 7.

Dans un mode de réalisation, l'ensemble de périphériques 12 comporte en outre, une LED 13_2 et une imprimante de reçus 13_3 et certaines des requêtes ou réponses http sont interprétées comme des commandes de pilotage de ces périphériques, de manière par exemple à imprimer à l'issue de la procédure de rechargement du crédit détaillée ci-dessus, un reçu indiquant le crédit ajouté et le solde total par exemple, ou encore d'allumer une LED quand la carte 3 est en cours de lecture/écriture par l'outil de lecture/écriture sans contact etc. Le pilote 11 est alors adapté pour déterminer, en fonction d'une réponse ou requête http interceptée, quel est le périphérique 13 à piloter et quelles(s) actions sont à piloter via ce périphérique.

Dans un mode de réalisation, le bloc 10 de périphérique(s) n'autorise la connexion au réseau Wifi que d'un terminal utilisateur 2 à la fois, pour rendre exclusif le pilotage des périphériques 13. Par exemple, le pilote 11 ne transmet pas au serveur 6 une requête qu'il reçoit et qui est adressée au serveur 6 par un terminal utilisateur tant qu'il n'a pas été mis fin à une transaction en cours engagée entre un autre terminal utilisateur et le serveur, lesdites requêtes et réponses de la transaction étant transmises via le pilote.

On notera qu'un utilisateur, se plaçant face à l'outil de lecture/écriture dont il a l'usage exclusif pendant l'opération, exclut également par construction le risque que plusieurs cartes se trouvent dans le champ de lecture/écriture de l'outil 13_1.

Dans un mode de réalisation, un terminal utilisateur 2 stocke un programme d'instructions logicielles, qui lorsqu'il est exécuté par un microprocesseur du terminal utilisateur, est adapté pour mettre en oeuvre les étapes réalisées par le terminal utilisateur et expliquées ci-dessus.

De même, dans un mode de réalisation, un pilote 11, respectivement un bloc 10 de périphérique(s), stocke un programme d'instructions logicielles, qui lorsqu'il est exécuté par un microprocesseur du pilote, respectivement du bloc 10 de périphérique(s), est adapté pour mettre en oeuvre les étapes réalisées par le pilote, respectivement le bloc 10 de périphérique(s), indiquées ci-dessus.

Le serveur Web 6 n'a ainsi pas besoin de connaissance de la proximité géographique entre le terminal utilisateur de navigation et les périphériques, et l'utilisateur n'a pas à saisir un identifiant unique du périphérique lors de sa connexion au serveur Web. Il n'est pas nécessaire que les actions initiées sur la page Web du navigateur passent d'abord par le serveur distant avant d'être transmises au périphérique pour action.

La présente invention permet ainsi un gain en termes de temps de traitement et de volume de ressources de communication utilisé.

Dans un mode de réalisation, les étapes suivantes sont mises en oeuvre entre l'utilisateur U, le navigateur Web du terminal utilisateur 2, le bloc de périphériques 10, la carte sans contact 3 de transport de l'utilisateur U et le serveur billettique 6.

L'utilisateur U requiert, via son terminal utilisateur 2, auprès du serveur 6, l'achat de droits à voyager : par exemple l'achat d'un titre de transport valable tout au long du prochain mois (par exemple le mois de janvier 2014), au sein des zones 1-3 du réseau de transport de l'lle-de-France. Le pilote 11 intercepte la requête HTTP correspondante envoyée par le terminal utilisateur 2 à destination du serveur 6, commande au lecteur de cartes 13_1 la lecture dans un champ de numéro client de la carte sans contact 3 de l'utilisateur, du numéro client de l'utilisateur, complète la requête HTTP avec ce numéro et transmet au serveur la requête HTTP ainsi complétée.

Des échanges ont ensuite lieu entre l'utilisateur U et le serveur billettique 6 relatifs au paiement à distance de ce titre de transport.

Une fois que le paiement est validé par le serveur billettique 6, que le serveur billettique 6 a mis à jour sa base de données clients quant au nouveau titre de transport acheté par l'utilisateur sur la base du numéro client de l'utilisateur et du titre de transport acheté, le serveur 6 transmet une réponse HTTP au terminal utilisateur 2 confirmant la bonne prise en compte de l'achat du nouveau titre de transport, cette réponse indiquant en outre la période de validité (dans le cas considéré janvier 2014) et la portée géographique de ce droit à voyager (zones 1-3 du réseau de transport dans le cas considéré). Le pilote 11 intercepte cette réponse HTTP, et commande au lecteur de cartes 13_1 l'écriture, dans un champ de période de validité au sein de la carte de transport, de la période de validité indiquée dans la réponse HTTP interceptée et l'écriture, dans un champ de portée géographique au sein de la carte de transport, de la portée géographique du droit à voyager indiquée dans la réponse HTTP interceptée. Puis la réponse interceptée est transmise au terminal utilisateur 2.

Suivant les modes de réalisation, seules les requêtes HTTP destinées au serveur de billettique 6 sont interceptées et analysées, les requêtes HTTP destinées à d'autres entités et/ou sous d'autres protocoles étant simplement relayées de manière transparente ou au contraire n'étant pas relayées.

Dans le mode de réalisation décrit ci-dessus, les terminaux utilisateurs, via leur navigateur Web, et le serveur Web 6 communiquaient en mettant en oeuvre le protocole http, les terminaux utilisateurs étant à l'initiative des requêtes transitant par le bloc de périphériques 10, le serveur étant à l'initiative des réponses à ces requêtes. Dans d'autres modes de réalisation, le serveur est à l'initiative des requêtes http et les terminaux à l'initiative des réponses http.

L'invention peut bien sûr être mise en oeuvre lorsque les navigateurs Web des terminaux et serveurs communiquent conformément à d'autres protocoles, par exemple https etc.

Dans un mode de réalisation, le serveur Web 6 est hébergé localement sur le bloc 10 de périphériques, rendant ainsi pleinement autonome le pilotage des périphériques 13 sur le réseau local à partir des terminaux utilisateurs 2, ou bien servant de serveur de repli dans un scénario de mode dégradé durant une déconnexion prolongé du serveur distant.

Dans un mode de réalisation, le bloc 10 de périphérique(s) est intégré à un terminal utilisateur 2.

La présente invention a été décrite ci-dessus en référence au domaine de la billettique, mais elle peut bien sûr être mise en oeuvre pour piloter tout type de périphérique à l'aide d'une page Web affichée sur un terminal utilisateur depuis un serveur Web.

## Revendications

1. Procédé de pilotage d'un ou plusieurs périphériques (13) dans un système comprenant un serveur de billettique (6), des terminaux utilisateurs (2), un pilote (11) de périphérique connecté à au moins un équipement périphérique (13), et un réseau de télécommunication (7) reliant le serveur de billettique et le pilote de périphérique, l'équipement périphérique (13) étant un outil de lecture/écriture sans contact d'informations sur des cartes à puces électroniques (3),
ledit procédé comprenant les étapes suivantes :
- transmission, via le réseau de télécommunication, d'un message adressé au serveur de billettique par un terminal utilisateur ou d'un message adressé par le serveur de billettique au terminal utilisateur ;
- interception, par ledit pilote de périphérique, du message adressé au serveur de billettique par le terminal utilisateur, respectivement du message adressé par le serveur de billettique au terminal utilisateur ;
- pilotage, par ledit pilote de périphérique, en fonction dudit message intercepté, d'au moins une opération de l'équipement périphérique;
- modification, par ledit pilote de périphérique, en fonction de l'opération pilotée, dudit message intercepté, puis transmission, par ledit pilote de périphérique, dudit message modifié au serveur de billettique, respectivement au terminal utilisateur ;
ledit procédé étant **caractérisé en ce que** l'opération pilotée de l'équipement périphérique comprend :
- la lecture, dans une carte à puce, d'informations par l'outil de lecture, lesdites informations lues étant fonction dudit message intercepté par le pilote de périphérique et adressé au terminal utilisateur par le serveur de billettique, ou
- l'écriture dans une carte à puce, d'informations par l'outil de lecture, lesdites informations écrites dans la puce étant fonction dudit message intercepté par le pilote de périphérique et adressé au serveur de billettique par le terminal utilisateur,
ladite modification dudit message intercepté étant fonction desdites informations lues ou écrites.

2. Procédé de pilotage d'un ou plusieurs périphériques selon la revendication 1, selon lequel lesdits messages et message modifié, sont des réponses ou requêtes HTTP ou HTTPS.

3. Procédé de pilotage d'un ou plusieurs périphériques selon la revendication 1 ou 2, selon lequel le pilote de périphérique (11) est connecté à plusieurs équipements périphériques (13) et le pilote de périphérique sélectionne, en fonction du contenu du message intercepté, celui desdits équipements périphériques qu'il va piloter.

4. Procédé de pilotage d'un ou plusieurs périphériques selon l'une quelconque des revendications précédentes, selon lequel ledit pilote de périphérique (11) ne transmet pas au serveur de billettique (6) un message qu'il reçoit et qui est adressé au serveur de billettique par un second terminal utilisateur tant qu'il n'a pas été mis fin à une transaction en cours engagée entre un premier terminal utilisateur et le serveur de billettique, des messages de la transaction étant transmis via le pilote de périphérique.

5. Procédé de pilotage d'un ou plusieurs périphériques selon l'une quelconque des revendications précédentes, selon lequel ledit pilote de périphérique (11) filtre le message intercepté en fonction du destinataire du message et/ou en fonction de la présence ou l'absence d'un mot-clef dans l'URI du message.

6. Programme d'ordinateur destiné à un pilote de périphérique (11) connecté à au moins un équipement périphérique (13) et disposé entre au moins un terminal utilisateur (2) et un réseau de télécommunication (7) auquel un serveur de billettique (6) est relié, ledit programme comportant des instructions pour que le pilote de périphérique mette en oeuvre les étapes d'interception, de pilotage et de modification du procédé selon l'une des revendications 1 à 5 lors d'une exécution du programme par des moyens de calcul du pilote de périphérique.

7. Pilote de périphérique (11) adapté pour être disposé entre au moins un terminal utilisateur (2) et un réseau de télécommunication (7) auquel un serveur de billettique (6) est relié, et adapté en outre pour être connecté à au moins un équipement périphérique (13), l'équipement périphérique (13) étant un outil de lecture/écriture sans contact d'informations sur des cartes à puces électroniques (3),
ledit pilote de périphérique étant adapté pour intercepter un message adressé au serveur de billettique par le terminal utilisateur via le réseau, respectivement un message adressé par le serveur au terminal utilisateur via le réseau,
ledit pilote de périphérique étant **caractérisé en ce qu'**il adapté pour piloter en fonction dudit message intercepté, au moins une opération de :
- lecture dans une carte à puce, par l'outil de lecture, d'informations en fonction dudit message intercepté et adressé au terminal utilisateur par le serveur de billettique, ou
- écriture dans une carte à puce, par l'outil de lecture, d'informations en fonction dudit message intercepté et adressé au serveur de billettique par le terminal utilisateur,
ledit pilote de périphérique étant adapté pour modifier en fonction de l'opération pilotée ledit message intercepté, puis pour transmettre ledit message modifié au serveur de billettique, respectivement au terminal utilisateur.

8. Pilote de périphérique selon la revendication 7, adapté pour intercepter un message de type réponse et/ou requête HTTP ou HTTPS, ledit message modifié étant également de type réponse et/ou requête HTTP ou HTTPS.

9. Pilote de périphérique selon la revendication 7 ou 8, connecté à plusieurs équipements périphériques (13) et adapté pour sélectionner en fonction du contenu du message intercepté, celui desdits équipements périphériques qu'il va piloter.

10. Pilote de périphérique selon l'une quelconque des revendications 7 à 9, adapté pour ne pas transmettre au serveur de billettique (6) un message qu'il reçoit et qui est adressé au serveur par un second terminal utilisateur tant qu'il n'a pas été mis fin à une transaction en cours engagée entre un premier terminal utilisateur et le serveur de billettique, des messages de la transaction étant transmis via ledit pilote de périphérique.

11. Pilote de périphérique selon l'une quelconque des revendications 7 à 10, adapté pour filtrer le message intercepté en fonction du destinataire du message et/ou en fonction de la présence ou l'absence d'un mot-clef dans l'URI du message.

## Patentansprüche

1. Verfahren zum Steuern eines Peripheriegeräts oder mehrerer Peripheriegeräte (13) in einem System, das einen E-Ticketing-Server (6), Nutzerendgeräte (2), einen an mindestens ein Peripheriegerät (13) angeschlossenen Gerätetreiber (11) und ein Telekommunikationsnetz (7) umfasst, das den E-Ticketing-Server und den Gerätetreiber verbindet,
wobei das Peripheriegerät (13) ein Tool zum kontaktlosen Lesen/Schreiben von Informationen auf elektronischen Chipkarten (3) ist,
wobei das Verfahren die folgenden Schritte umfasst:
- Übertragen einer Nachricht über das Telekommunikationsnetz, die von einem Nutzerendgerät an den E-Ticketing-Server adressiert ist, oder einer Nachricht, die vom E-Ticketing-Server an das Nutzerendgerät adressiert ist;
- Abfangen der Nachricht durch den Gerätetreiber, die vom Nutzerendgerät an den E-Ticketing-Server adressiert ist, bzw. der Nachricht, die vom E-Ticketing-Server an das Nutzerendgerät adressiert ist;
- Steuern in Anhängigkeit von der abgefangenen Nachricht, mindestens eines Funktionsablaufs des Peripheriegeräts durch den Gerätetreiber;
- Modifizieren in Abhängigkeit von dem gesteuerten Funktionsablauf, der abgefangenen Nachricht durch den Gerätetreiber, dann Übertragen der modifizierten Nachricht an den E-Ticketing-Server bzw. das Nutzerendgerät durch den Gerätetreiber;
wobei das Verfahren **dadurch gekennzeichnet ist, dass** der gesteuerte Funktionsablauf des Peripheriegeräts umfasst:
- Lesen von Informationen in einer Chipkarte durch das Lese-Tool, wobei die gelesenen Informationen von der Nachricht abhängen, die vom Gerätetreiber abgefangen und vom E-Ticketing-Server an das Nutzerendgerät adressiert wurde, oder
- Schreiben von Informationen durch das Schreib-Tool in eine Chipkarte, wobei die in den Chip geschriebenen Informationen von der Nachricht abhängen, die vom Gerätetreiber abgefangen und vom Nutzerendgerät an den E-Ticketing-Server adressiert wurde,
wobei das Modifizieren der abgefangenen Nachricht von den gelesenen oder geschriebenen Informationen abhängt.

2. Verfahren zum Steuern eines Peripheriegeräts oder mehrerer Peripheriegeräte nach Anspruch 1, gemäß dem die Nachrichten und die modifizierte Nachricht HTTP-oder HTTPS-Antworten oder HTTP- oder HTTPS-Anfragen sind.

3. Verfahren zum Steuern eines Peripheriegeräts oder mehrerer Peripheriegeräte nach Anspruch 1 oder 2, gemäß dem der Gerätetreiber (11) an mehrere Peripheriegeräte (13) angeschlossen ist und der Gerätetreiber in Abhängigkeit vom Inhalt der abgefangenen Nachricht dasjenige der Peripheriegeräte auswählt, das er steuern wird.

4. Verfahren zum Steuern eines Peripheriegeräts oder mehrerer Peripheriegeräte nach einem der vorhergehenden Ansprüche, gemäß dem der Gerätetreiber (11) an den E-Ticketing-Server (6) eine Nachricht, die er empfängt und die von einem zweiten Nutzerendgerät an den E-Ticketing-Server adressiert ist, nicht überträgt, solange eine laufende Transaktion, die zwischen einem ersten Nutzerendgerät und dem E-Ticketing-Server begonnen hat, nicht abgeschlossen ist, wobei Nachrichten der Transaktion über den Gerätetreiber übertragen werden.

5. Verfahren zum Steuern eines Peripheriegeräts oder mehrerer Peripheriegeräte nach einem der vorhergehenden Ansprüche, gemäß dem der Gerätetreiber (11) die abgefangene Nachricht in Abhängigkeit vom Empfänger der Nachricht und/oder in Abhängigkeit vom Vorhandensein oder Nichtvorhandensein eines Stichworts im URI der Nachricht filtert.

6. Computerprogramm, das für einen Gerätetreiber (11) bestimmt ist, der an mindestens ein Peripheriegerät (13) angeschlossen und zwischen mindestens einem Nutzerendgerät (2) und einem Telekommunikationsnetz (7) angeordnet ist, mit dem ein E-Ticketing-Server (6) verbunden ist, wobei das Programm Befehle umfasst, damit der Gerätetreiber die Abfang-, Steuerungs- und Modifizierungsschritte des Verfahren nach einem der Ansprüche 1 bis 5 beim Ausführen des Programms durch Recheneinrichtungen des Gerätetreibers durchführt.

7. Gerätetreiber (11), der dazu angepasst ist, zwischen mindestens einem Nutzerendgerät (2) und einem Telekommunikationsnetz (7) angeordnet zu sein, mit dem ein E-Ticketing-Server (6) verbunden ist, und der dazu angepasst ist, an mindestens ein Peripheriegerät (13) angeschlossen zu sein, wobei das Peripheriegerät (13) ein Tool zum berührungslosen Lesen/Schreiben von Informationen auf elektronischen Chipkarten (3) ist,
wobei der Gerätetreiber dazu angepasst ist, eine Nachricht, die vom Nutzerendgerät übe das Netz an den E-Ticketing-Server adressiert ist, bzw. eine Nachricht, die vom E-Ticketing-Server über das Netz an das Nutzerendgerät adressiert ist, abzufangen, wobei der Gerätetreiber **dadurch gekennzeichnet, ist, dass** er dazu angepasst ist, in Abhängigkeit von der abgefangenen Nachricht, mindestens einen Funktionsablauf des:
- Lesens durch das Lese-Tool, von Informationen in einer Chipkarte in Abhängigkeit von der Nachricht, die abgefangen und vom E-Ticketing-Server an das Nutzerendgerät adressiert wurde, oder
- Schreibens von Informationen in eine Chipkarte durch das Schreib-Tool, in Abhängigkeit von der Nachricht, die abgefangen und vom Nutzerendgerät an den E-Ticketing-Server adressiert wurde,
zu steuern,
wobei der Gerätetreiber dazu angepasst ist, in Abhängigkeit vom gesteuerten Funktionsablauf die abgefangene Nachricht zu modifizieren und dann die modifizierte Nachricht an den E-Ticketing-Server bzw. das Nutzerendgerät zu übertragen.

8. Gerätetreiber nach Anspruch 7, der dazu angepasst ist, eine Nachricht des Typs HTTP- oder HTTPS-Antwort und/oder HTTP- oder HTTPS-Anfrage abzufangen, wobei die modifizierte Nachricht ebenfalls vom Typ HTTP- oder HTTPS-Antwort und/oder HTTP- oder HTTPS-Anfrage ist.

9. Gerätetreiber nach Anspruch 7 oder 8, der an mehrere Peripheriegeräte (13) angeschlossen und dazu angepasst ist, in Abhängigkeit vom Inhalt der abgefangenen Nachricht dasjenige der Peripheriegeräte auszuwählen, das er steuern wird.

10. Gerätetreiber nach einem der Ansprüche 7 bis 9, der dazu angepasst ist, an den E-Ticketing-Server (6) eine Nachricht, die er empfängt und die von einem zweiten Nutzerendgerät an den Server adressiert ist, nicht zu übertragen, solange eine laufende Transaktion, die zwischen einem ersten Nutzerendgerät und dem E-Ticketing-Server begonnen hat, nicht abgeschlossen ist, wobei Nachrichten der Transaktion über den Gerätetreiber übertragen werden.

11. Gerätetreiber nach einem der Ansprüche 7 bis 10, der dazu angepasst ist, die abgefangene Nachricht in Abhängigkeit vom Empfänger der Nachricht und/oder in Abhängigkeit vom Vorhandensein oder Nichtvorhandensein eines Stichworts im URI der Nachricht zu filtern.

## Claims

1. - Method of controlling one or more peripherals (13) in a system comprising a ticketing server (6), user terminals (2), a peripheral driver (11) connected to at least one peripheral device (13), and a telecommunication network (7) connecting the ticketing server and the peripheral driver, the peripheral device (13) being a contactless tool for reading/writing data on electronic chip cards (3),
said method comprising the following steps:
- transmission, via the telecommunication network, of a message addressed to the ticketing server by a user terminal or a message addressed by the ticketing server to the user terminal;
- interception by said peripheral driver of the message addressed to the server by the user terminal, respectively a message addressed by the ticketing server to the user terminal;
- control of at least one operation of the peripheral device by said peripheral driver on the basis of the intercepted message;
- modification of said intercepted message by said peripheral driver as a function of the controlled operation and then transmission of said modified message to the ticketing server respectively to the user terminal by said peripheral driver;
said method being **characterised in that** the operation controlled by the peripheral device comprises:
- reading data from a chip card by means of the reading tool, said read data being based on said message intercepted by the peripheral driver and addressed to the user terminal by the ticketing server, or
- writing data on a chip card by means of the reading tool, said data written on the card being based on said message intercepted by the peripheral driver and addressed to the ticketing server by the user terminal,
said modification of said intercepted message being based on said read or written data.

2. - Method of controlling one or more peripherals as claimed in claim 1, whereby said messages and modified message are HTTP or HTTPS responses or requests.

3. - Method of controlling one or more peripherals as claimed in claim 1 or 2, whereby the peripheral driver (11) is connected to several peripheral devices (13) and the peripheral driver selects which of said peripheral devices it will control on the basis of the content of the intercepted message.

4. - Method of controlling one or more peripherals as claimed in any one of the preceding claims, whereby said peripheral driver (11) does not transmit a message which it receives and which is addressed to the ticketing server by a second user terminal to the ticketing server (6) until it has terminated a transaction currently being handled between a first user terminal and the ticketing server, transaction messages being transmitted via the peripheral driver.

5. - Method of controlling one or more peripherals as claimed in any one of the preceding claims, whereby said peripheral driver (11) filters the intercepted message on the basis of the addressee of the message and/or on the basis of the presence or absence of a keyword in the URI of the message.

6. - Computer programme intended for a peripheral driver (11) connected to at least one peripheral device (13) and disposed between at least one user terminal (2) and a telecommunication network (7) to which the ticketing server (6) is connected, said programme comprising instructions so that the peripheral driver implements the interception, control and modification steps of the method as claimed in one of claims 1 to 5 during execution of the programme by computer means of the peripheral driver.

7. - Peripheral driver (11) configured to be disposed between at least one user terminal (2) and a telecommunication network (7) to which the ticketing server (6) is connected, and further configured to be connected to at least one peripheral device (13), the peripheral device (13) being a contactless tool for reading/writing data on electronic chip cards (3),
said peripheral driver being configured to intercept a message addressed to the ticketing server by the user terminal via the network, respectively a message addressed by the server to the user terminal via the network, said peripheral driver being **characterised in that** it is configured to control, on the basis of said intercepted message, at least one operation of:
- reading data from a chip card by means of the reading tool on the basis of said intercepted message addressed to the user terminal by the ticketing server, or
- writing data on a chip card by means of the reading tool on the basis of said intercepted message addressed to the ticketing server by the user terminal,
said peripheral driver being configured to modify said intercepted message as a function of the controlled operation and then to transmit said modified message to the ticketing server, respectively to the user terminal.

8. - Peripheral driver as claimed in claim 7, configured to intercept a message of the HTTP or HTTPS response and/or request type, said modified message also being of the HTTP or HTTPS response and/or request type.

9. - Peripheral driver as claimed in claim 7 or 8 connected to several peripheral devices (13) and configured to select which of said peripheral devices it will control on the basis of the content of the intercepted message.

10. - Peripheral device as claimed in any one of claims 7 to 9 configured not to transmit to the ticketing server (6) a message which it receives and which is addressed to the server by a second user terminal to the ticketing server (6) until it has terminated a transaction currently being handled between a first user terminal and the ticketing server, transaction messages being transmitted via said peripheral driver.

11. - Peripheral device as claimed in any one of claims 7 to 10 configured to filter the intercepted message on the basis of the addressee of the message and/or on the basis of the presence or absence of a keyword in the URI of the message.
